# EUROPEAN PATENT SPECIFICATION

(11) **EP 2 153 954 B1**
(45) Date of publication and mention of the grant of the patent: **14.01.2015**
(21) Application number: 08425544.7
(22) Date of filing: 06.08.2008
(51) Int. Cl.: B27M 1/08, B27F 1/04, B23Q 7/04, B23Q 3/06, B23Q 1/03, B27C 9/02

(54) **Automatic working centre for frame pieces**
Automatische Arbeitsanlage für Rahmenteile
Centre d'usinage automatique de pièces de cadre

(43) Date of publication of application: 17.02.2010
(73) Proprietor: Masterwood S.p.A., 47900 Rimini (RN) (IT)
(72) Inventor: Muti, Giancarlo, 47900 Rimini (RN) (IT)
(74) Representative: Provvisionato, Paolo

(56) References cited:
- EP-A- 1 281 491
- EP-A- 1 810 802
- EP-A- 1 832 402
- EP-A1- 0 335 464
- DE-A1- 10 108 134
- DE-A1-102007 044 588
- DE-A1-102007 044 589

## Description

The present invention concerns an automatic working centre for frame pieces, as per the preamble of claim 1. An example of such a working centre is disclosed by DE-A-102007044588.

Although the invention can be used for different applications, it lends itself to the manufacture of uprights and crosspieces for doors and windows. In fact, this type of machining very often requires the same type of operation to be mirrored on pairs of work pieces of the same type. Moreover, the operations in question are often carried out on opposite faces of a piece and therefore, it is necessary to provide for blocking of the piece in successive stages to allow machine tools to approach first on one side and then on the other.

These working centres include a fixed load-bearing structure: both the work table to support the pieces to be worked and the operating head to which the various tools required for the different machining operations are fitted to this structure.

On many woodworking machines, the work table is comprised of a certain number of parallel cross bars, which can be moved along an axis of the table itself. The means to lock the piece for working are fitted on this cross bars and said locking means are also mobile, moving on carriages along the cross bars and therefore, in a perpendicular direction to the aforementioned axis. The locking means may be of various types: suction cups equipped with a pressure fastening system or devices with clamps and stops that can be associated with the cross bars, level with strike plates are the most frequently used. In any case, since the purpose is to support the work piece, the number of cross bars and locking means will vary both according to the dimensions of the piece and to the dimensions of the machine.

There are also other known devices for locking pieces in position to be worked and these are suitable for use in automatic and/or manual operating modes.

For example, there are automatic locking devices where the clamps are controlled by linear movements, suitably coordinated to guarantee stable piece positioning, even when said pieces are to be worked in mirrored mode, on both faces.

However, these devices have a mechanical complexity that involves extremely high costs and above all, they have been found to have piece control limits where the surfaces available for locking said pieces into position have small dimensions. In this case in fact, there may be small movements of work pieces leading to imprecise machining operations.

As far as manually controlled devices are concerned, these require all interventions to be performed while the machine is at a standstill; this leads to slowing down the working rate and creating unacceptable production rate reductions.

The purpose of this invention is therefore to eliminate the problems cited above.

This purpose is achieved by a device as per claim 1 that automatically controls shaped clamps moved with a roto-translation motion.

The main advantage achieved using this invention essentially consists of the fact that the pieces to be worked are locked into position more effectively, which is particularly important in the case of having to work pieces with small-sized locking surfaces. Moreover, the shape of the locking elements allows optimum positioning of these surfaces according to the machining operations to be performed.

In particular, when manufacturing doors and windows, for which it is necessary to carry out machining operations on a pair of uprights and a pair of crosspieces, in one operating cycle it is possible to work the exact number of parts needed for one door or one window.

Lastly, the construction complexity of the mechanical parts is reduced to a minimum, with resulting benefits both in terms of overall dimensions, and above all, of cost-effectiveness.

Further benefits and characteristics of this invention will become evident in the detailed description to follow, with reference to the attached drawings which illustrate by way of example but without limitation, machine execution, where:

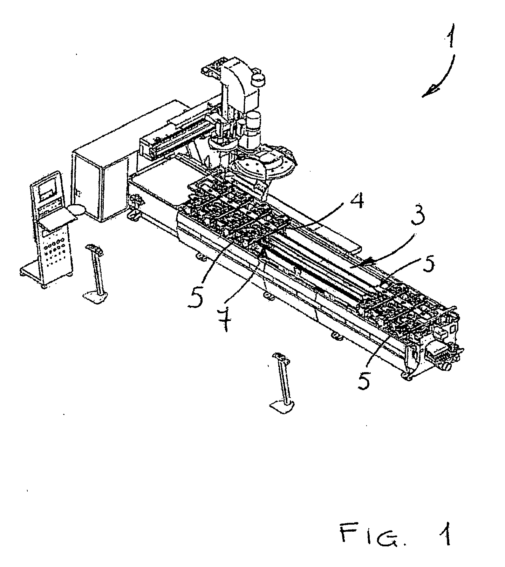

- Figure 1 illustrates an overall perspective view of the invention;
- Figure 2 illustrates the invention in an initial operating condition, shown respectively from the front (Fig. 2a) and in perspective (Fig. 2b);
- Figure 3 illustrates the invention in a second operating condition, shown respectively from the front (Fig. 3a) and in perspective (Fig. 3b);
- Figure 4 illustrates the invention in a third operating condition, shown respectively from the front (Fig. 4a) and in perspective (Fig. 4b);
- Figure 5 illustrates the invention in a fourth operating condition, shown respectively from the front (Fig. 5a) and in perspective (Fig. 5b);
- Figure 6 illustrates the invention in a fifth operating condition, shown respectively from the front (Fig. 6a) and in perspective (Fig. 6b);
- Figure 7 illustrates a detail of the invention shown in perspective;
- Figure 8 illustrates the detail embodied in Figure 7, shown in perspective in a first implementation solution;
- Figure 9 illustrates the detail embodied in Figure 7, shown in perspective in a second implementation solution.

As can be seen from the figures, the invention consists of an automatic working centre for frame pieces, comprised of a work table (3) formed by several mobile cross bars (4), in which each bar (4) is equipped with locking means (5) for the pieces (2) to be worked as well as with mobile strike plates (10) to act as stops for the pieces (2) to be worked.

On this working centre (1), the locking means (5) include at least two pressers (6), which are driven with a roto-translation movement allowing them to pass from a standstill position, in which they do not interact with the pieces (2), to a working position, in which they clamp the pieces (2) during machining, and vice versa. The pressers (6) include sections of surfaces (61), shaped so as to complement one another, allowing them also to interact on the pieces (2) to be worked at the same time.

Making explicit reference to the implementation solutions embodied in the figures, the working centre (1) is comprised of bars (4), each equipped with three pressers (6), so as to allow machining operations on the opposite faces of two pieces (2) of the same type (uprights or crosspieces) in sequence, keeping them constantly clamped in position throughout each operating stage.

Overall, therefore, since the bars (4) can be grouped together in different ways, the working centre (1) can perform machining operations on opposite faces of pairs of work pieces (2) - even of different types - in sequence, keeping them constantly clamped in position throughout each operating stage. When manufacturing doors and windows, this is extremely useful since, at the end of each production cycle, the pieces (2) needed to assemble a full door or window are ready.

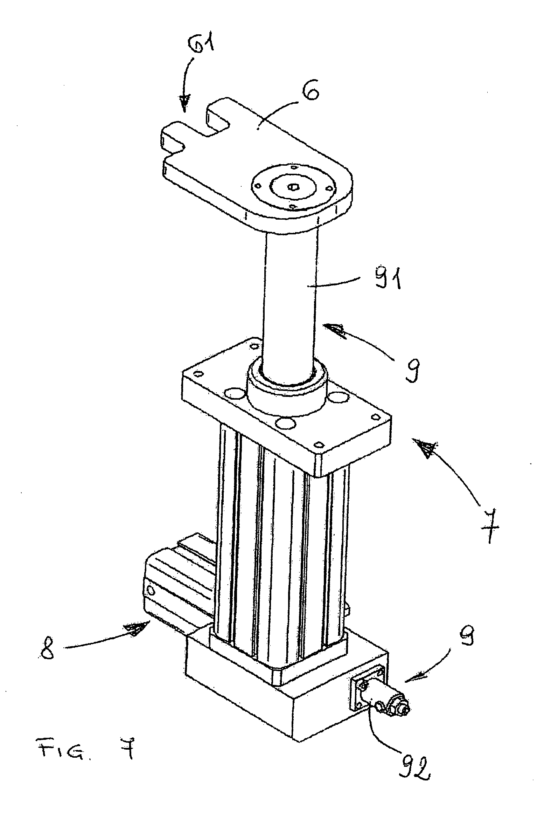

The working centre (1) also includes a movement device (7) for the pressers (6), as embodied in Figure 7, which transmits a roto-translation movement. The movement device (7) for the pressers (6) is comprised of actuators means (8) and motion transmission means (9), that can be implemented in various functionally equivalent ways.

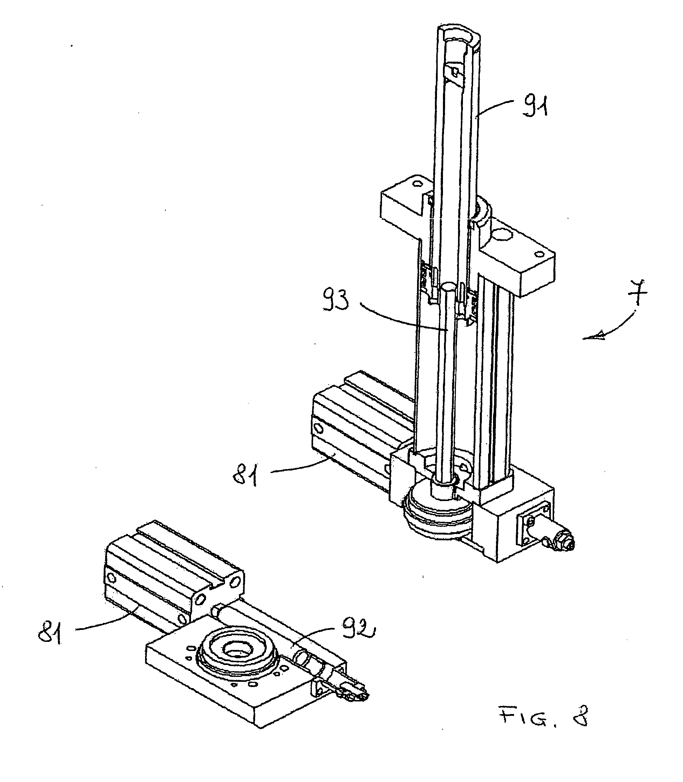

A first solution, embodied in Figure 8, shows the motion transmission means (9) inclusive of a group of sliding pistons (91), each one integral with a corresponding presser (6) and used to move the pressers (6) vertically according to the size of the piece (2) to be worked. The motion transmission means (9) also include a group of cylinders (92), one for each piston (91), which slide tangentially to the corresponding piston (91) so as to cause the rotary movement of the presser (6) integral with the piston (91). The pistons (91) have a polygonal section core (93) so as to maintain separate control over the rotary and translation movements of the pressers (6).

In the solution embodied in Figure 8, the actuators means (8) include a pneumatic system (81) to control the motion transmission means (9). In this case, therefore, pistons (91) and cylinders (92) will move between just two working positions, which will be reached by emitting compressed air into their respective sliding sleeves. Thus there will be only two possible angled positions for the pressers (6), according to the sliding possibilities for the cylinders (92).

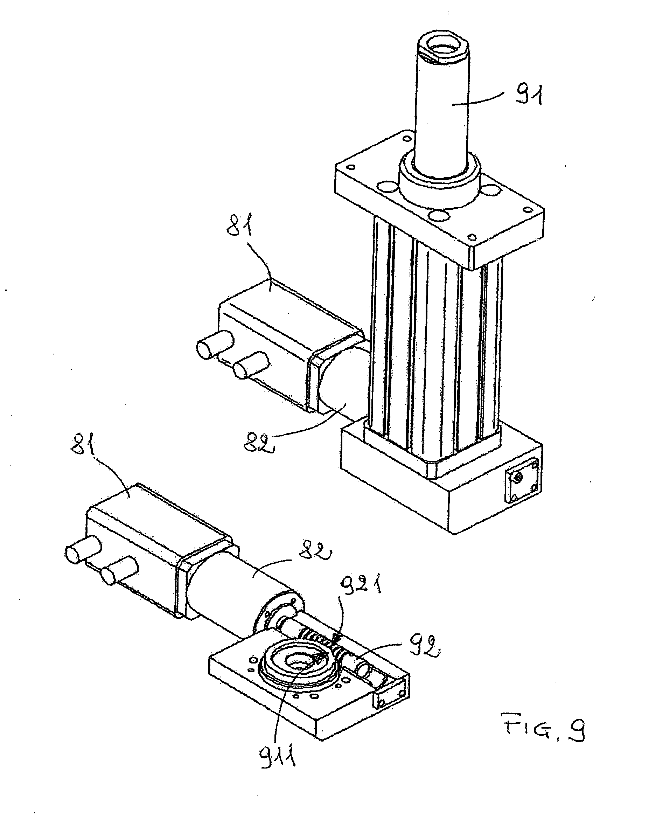

In a second solution embodied in Figure 9, as well as a group of pistons (91), the same as those already described and controlled by a same pneumatic system (81), the actuators means (8) include a mechanical system (82) to control the cylinders (92) so as to be able to change their position continuously. This way, it is also possible to change continuously the angled position of the associated pressers (6). Therefore, the cylinders (92) and pistons (91) include sections of surfaces (911, 921) correspondingly shaped so as to interact with one another to cause the pressers (6) to rotate arbitrarily.

The figures from 2 to 6 embody an operating sequence regarding the simultaneous machining of two pieces (2) on two opposite faces. For the sake of simplicity, only one cross bar (4) and relevant locking means (5) is shown.

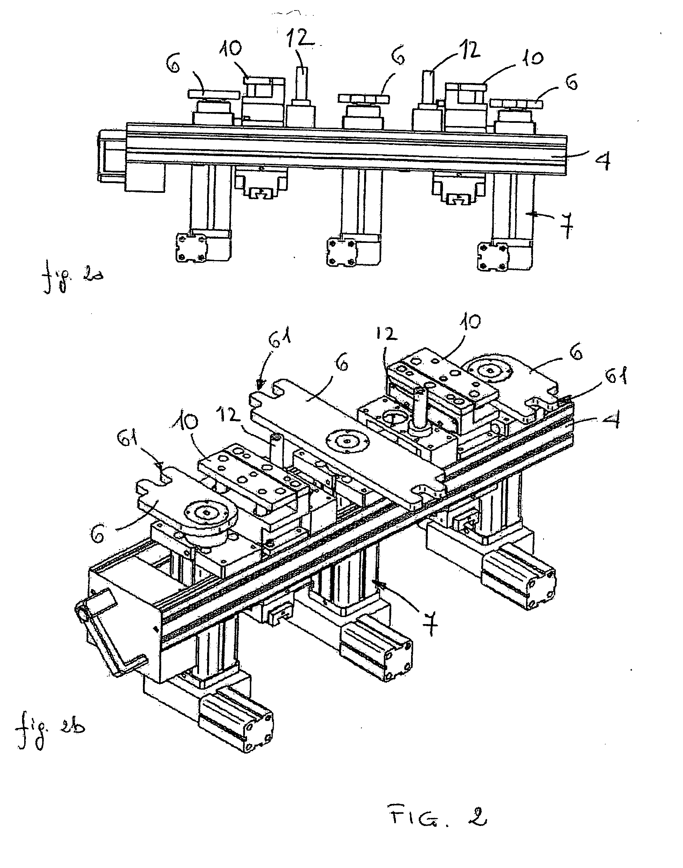

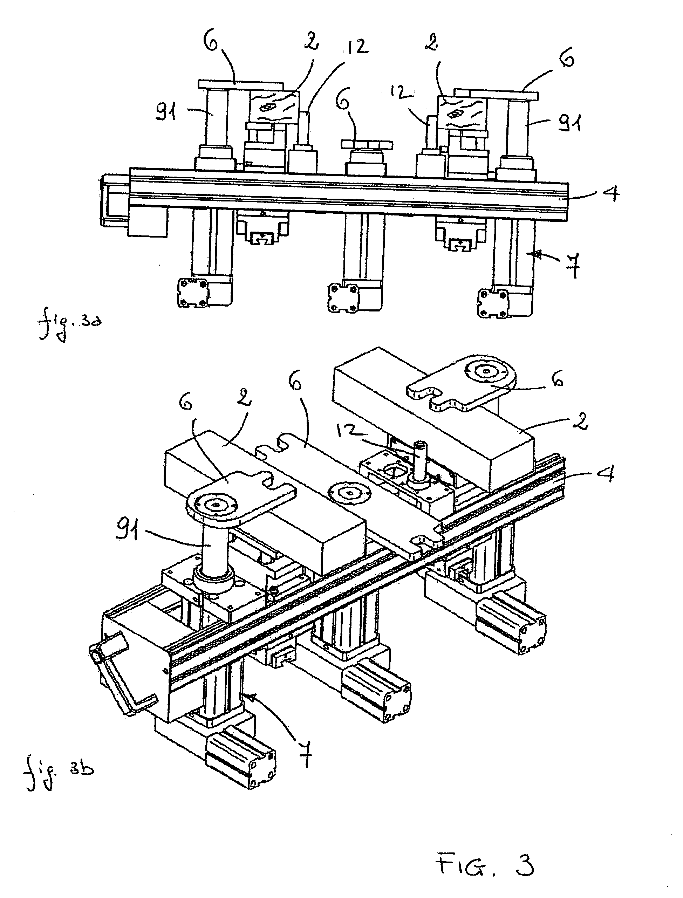

The situation embodied in Figure 2 shows the working centre (1) at a standstill and the pieces (2) not yet in the working position; in Figure 3, the frame pieces (2) are ready for working on the two inner faces and the two side pressers (6) are in the working position. To reach this position, in order, the corresponding pistons (91) have performed a complete stroke upwards, the cylinders (92) have caused the pressers (6) to rotate as required and the pistons (91) have been retracted to intercept and lock the pieces (2) for working in position. The strike plates (10) act as inner stops for positioning the pieces (2) and they retract prior to the intervention of the machine tools.

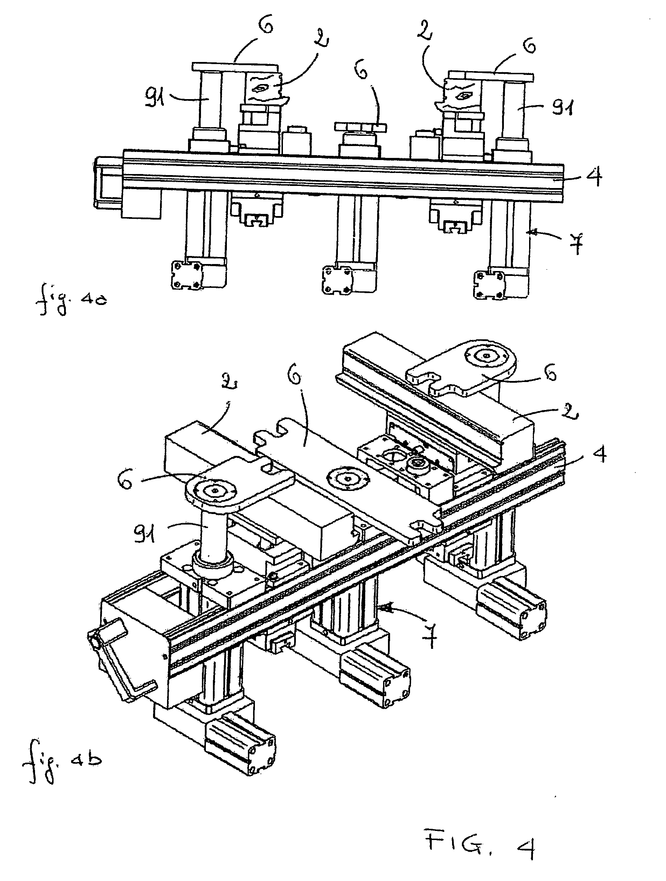

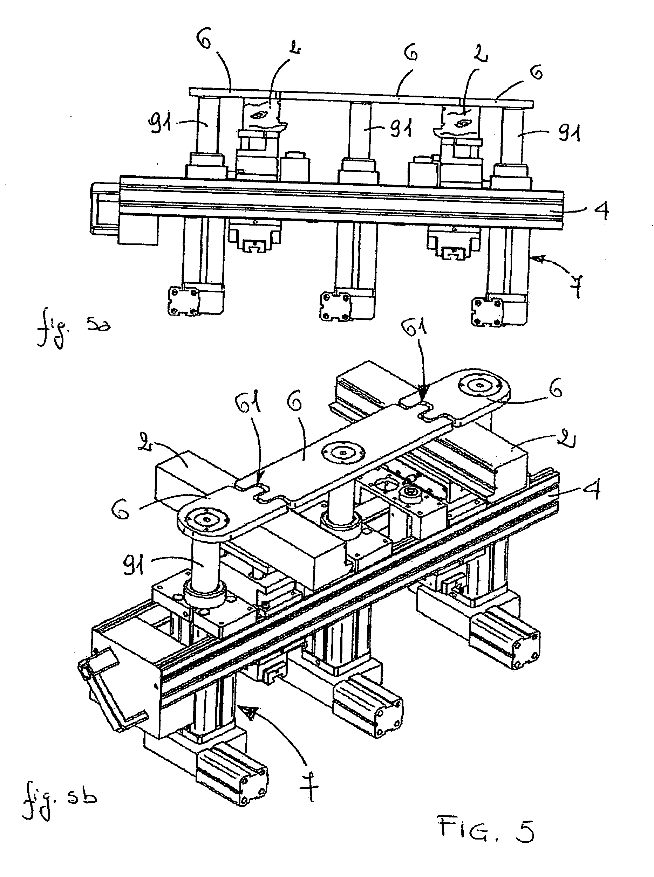

In Figure 4, the inner faces of the pieces (2) have been worked; in Figure 5, the central presser (6) has been moved to the working position, following the same process as that described for the side pressers (6), while the side pressers (6) are still engaged; this guarantees that the pieces (2) will maintain their positions unchanged.

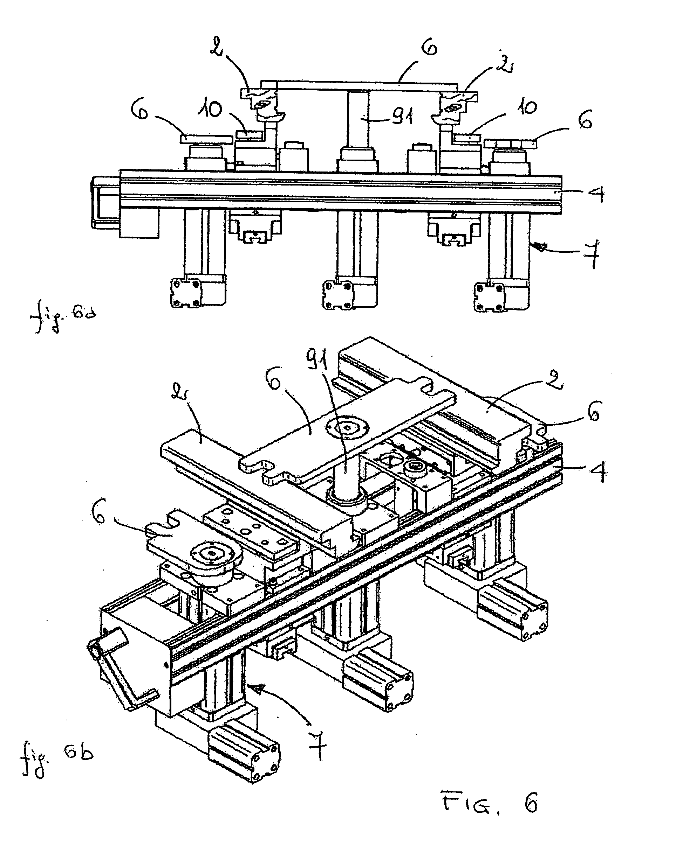

In Figure 6, the side pressers (6) have returned to the standby position and the outer faces of the pieces (2) have been worked, after which, the mobile strike plates (10) have moved to a more suitable position for correct tool intervention.

The shaped sections of surfaces (61) allow two pressers (6) to intervene contemporaneously on the same piece (2) at any stage of working regardless of the dimensions of the locking surfaces, thereby guaranteeing the position of said piece (2).

In practice, of course, it will be possible to make changes and/or improvements, falling in any case within the claims.

## Claims

1. An automatic working centre for frame pieces, comprised of a work table (3) formed by a group of mobile cross bars (4), wherein each bar (4) is equipped with locking means (5) for the pieces (2) to be worked, the locking means (5) including at least two pressers (6), said pressers (6) comprising sections of surfaces (61) interpenetratingly shaped, so as to complement one another on the upper surface of the pieces (2), allowing two pressers (6) to act on the same piece (2) to be worked at the same time, said working centre (1) being **characterized in that** it comprises a movement device (7) for the pressers (6), able to transmit a roto-translating movement, allowing them to pass from a standstill position, in which they do not interact with the pieces (2), to a working position, in which they clamp the pieces (2) during machining, and vice versa, and mobile strike plates (10), separate from the pressers (6), passing during machining from an extended position, in which they form an extended lower support for the pieces (2), to a retracted position, in which they do not interact with the pieces (2), and vice versa.

2. A working centre, according to claim 1, **characterised in that** it includes three pressers (6), the third presser comprising double sections of surfaces (61) interpenetratingly shaped so as to complement both other pressers on the upper surface of the pieces (2), so as to be able to work both the opposite inside faces, both the opposite outside faces of two pieces (2) in sequence, keeping them constantly clamped in each operating stage.

3. A working centre according to claim 2, **characterised in that** it includes groups of three pressers (6), so as to be able to work both the opposite inside faces, both the opposite outside faces of pairs of pieces (2) in sequence, keeping them constantly clamped in each operating stage.

4. A working centre, according to claim 1, **characterised in that** the movement device (7) for the pressers (6) includes actuator means (8) and motion transmission means (9).

5. A working centre, according to claim 4, **characterised in that** the actuators means (8) include a pneumatic system (81) to control the motion transmission means (9).

6. A working centre, according to claim 4, **characterised in that** the actuators means (8) include a mechanical system (82) to control the motion transmission means (9).

7. A working centre, according to claim 4, **characterised in that** the motion transmission means (9) include a group of sliding pistons (91), each one integral with a corresponding presser (6), able to move said pressers (6) vertically according to the dimensions of the piece (2) to be worked.

8. A working centre, according to claim 7, **characterised in that** the motion transmission means (9) include a group of cylinders (92), one for each piston (91), sliding tangentially to said corresponding piston (91) so as to cause the presser (6) integral with the piston (91) to rotate.

9. A working centre, according to claim 8, **characterised in that** the cylinders (92) and pistons (91) include sections of surfaces (911, 921), correspondingly shaped to interact with one another and cause the presser (6) to rotate arbitrarily.

10. A working centre, according to claim 7, **characterised in that** the pistons (91) have a polygonal section core (93), so as to maintain separate control over the rotary and translation movements of the pressers (6).

## Patentansprüche

1. Eine automatische Arbeitsanlage für Rahmenteile, bestehend aus einem Arbeitstisch (3), der aus einer Gruppe beweglicher Querstäbe (4) gebildet ist, wobei jeder Stab (4) mit Arretiermitteln (5) für die zu bearbeitenden Werkstücke (2) ausgestattet ist; die Arretiermittel (5) umfassen mindestens zwei Andrücker (6), wobei besagte Andrücker (6) Abschnitte von Flächen (61) umfassen, die so geformt sind, dass sie ineinander greifen, um einander an der oberen Fläche der Werkstücke (2) zu ergänzen und es den zwei Andrückern (6) zu ermöglichen, auf das jeweilige Werkstück (2) einzuwirken, das zur selben Zeit verarbeitet werden soll; besagte Arbeitsanlage (1) ist **dadurch gekennzeichnet, dass** sie eine Bewegungsvorrichtung (7) für die Andrücker (6) umfasst, die dazu imstande ist, an die Andrücker (6) eine drehende und querschiebende Bewegung zu übertragen und es ihnen dadurch zu ermöglichen, aus der Ruheposition, in der sie nicht auf die Werkstücke (2) einwirken, in eine Betriebsposition zu wechseln, in der sie die Werkstücke (2) während der Verarbeitung einklemmen, und umgekehrt, sowie bewegliche Schlagplatten (10), die getrennt von den Andrückern (6) sind und während der Bearbeitung von einer ausgefahrenen Position, in der sie eine erweiterte Halterung an der Unterseite der Werkstücke (2) bilden, in eine zurückgefahrene Position wechseln können, in der sie nicht mit den Werkstücken (2) interagieren, und umgekehrt.

2. Eine Arbeitsanlage nach Patentanspruch 1, **gekennzeichnet dadurch, dass** sie drei Andrücker (6) umfasst, wobei der dritte Andrücker doppelte Flächenabschnitte (61) umfasst, welche so geformt sind, dass sie ineinander greifen, so dass sie die beiden anderen Andrücker auf der oberen Seite der Werkstücke (2) ergänzen, um dazu imstande zu sein, beide gegenüber liegenden Innenseiten und beide gegenüber liegenden Außenseiten zweier Werkstücke (2) nacheinander zu bearbeiten und sie dabei in jeder Arbeitphase ständig festgeklemmt zu halten.

3. Eine Arbeitsanlage nach Patentanspruch 2, **gekennzeichnet dadurch, dass** sie Gruppen von drei Andrückern (6) umfasst, so dass sie dazu imstande ist, beide gegenüber liegenden Innenseiten und beide gegenüber liegenden Außenseiten von Paaren von Werkstücken (2) nacheinander zu bearbeiten und sie dabei in jeder Arbeitphase ständig festgeklemmt zu halten.

4. Eine Arbeitsanlage nach Patentanspruch 1, **gekennzeichnet dadurch, dass** die Bewegungsvorrichtung (7) für die Andrücker (6) Stellmittel (8) und Mittel zur Übertragung der Bewegung (9) umfasst.

5. Eine Arbeitsanlage nach Patentanspruch 4, **gekennzeichnet dadurch, dass** die Stellmittel (8) ein mechanisches System umfassen, um die Mittel zur Übertragung der Bewegung (9) zu steuern.

6. Eine Arbeitsanlage nach Patentanspruch 4, **gekennzeichnet dadurch, dass** die Stellmittel (8) ein mechanisches System (82) umfassen, um die Mittel zur Übertragung der Bewegung (9) zu steuern.

7. Eine Arbeitsanlage nach Patentanspruch 4, **gekennzeichnet dadurch, dass** die Mittel zur Übertragung der Bewegung (9) eine Gruppe von Gleitkolben (91) umfassen, von denen jeweils einer in einen entsprechenden Andrücker (6) integriert ist und dazu imstande ist, besagten Andrücker (6) vertikal entsprechend der Abmessungen des zu verarbeitenden Werkstücks (2) zu verschieben.

8. Eine Arbeitsanlage nach Patentanspruch 7, **gekennzeichnet dadurch, dass** die Mittel zur Übertragung der Bewegung (9) eine Gruppe von Zylindern (92) umfassen, einen pro Kolben (91), die jeweils tangential zu besagtem entsprechenden Kolben (91) gleiten, was dazu führt, dass sich der Andrücker (6), der in dem Kolben (91) integriert ist, dreht.

9. Eine Arbeitsanlage nach Patentanspruch 8, **gekennzeichnet dadurch, dass** die Zylinder (92) und die Kolben (91) Flächenabschnitte (911, 921) umfassen, die entsprechend geformt sind, um miteinander zu interagieren und den Andrücker (6) dazu zu bringen, sich beliebig zu drehen.

10. Eine Arbeitsanlage nach Patentanspruch 7, **gekennzeichnet dadurch, dass** die Kolben (91) einen polygonalen Abschnittskern (93) haben, damit sie die Dreh- und Verschiebungsbewegungen der Andrücker (6) getrennt steuern können.

## Revendications

1. Un centre d'usinage automatique de pièces de cadre, comprenant une table d'usinage (3) formée par un groupe de barres transversales mobiles (4), dans lequel chaque barre (4) est équipée de moyens (5) de blocage des pièces (2) à usiner, lesdits moyens de blocage (5) comprenant au moins deux presseurs (6), lesdits presseurs (6) comprenant des sections de surfaces (61) qui sont profilées de façon interpénétrante, afin de se compléter entre elles sur la surface supérieure des pièces (2), pour permettre aux deux presseurs (6) d'agir sur la même pièce (2) à usiner en même temps, ledit centre d'usinage (1) étant **caractérisé en ce qu'**il comprend un dispositif (7) d'actionnement des presseurs (6), destiné à transmettre un mouvement de roto-translation, de manière à les faire passer d'une position de repos, dans laquelle ils n'interagissent pas avec les pièces (2), à une position de travail, dans laquelle ils enserrent les pièces (2) pendant l'usinage, et inversement, et des plaques de butée mobiles (10), séparées des presseurs (6), qui passent, pendant l'usinage, d'une position étendue, dans laquelle elles définissent un support inférieur pour les pièces (2), à une position rentrée, dans laquelle elles n'interagissent pas avec les pièces (2), et inversement.

2. Le centre d'usinage selon la revendication 1, **caractérisé en ce qu'**il comprend trois presseurs (6), le troisième presseur comprenant des sections de surfaces (61) doubles, qui sont profilées de façon interpénétrante afin de se compléter avec les deux autres presseurs sur la surface supérieure des pièces (2), de manière à pouvoir usiner les deux faces intérieures opposées, les deux faces extérieures opposées de deux pièces (2) en séquence, en les maintenant serrées en permanence durant chaque phase d'usinage.

3. Le centre d'usinage selon la revendication 2, **caractérisé en ce qu'**il comprend des groupes de trois presseurs (6), de manière à pouvoir usiner les deux faces intérieures opposées, les deux faces extérieures opposées de paires de pièces (2) en séquence, en les maintenant serrées en permanence durant chaque phase d'usinage.

4. Le centre d'usinage selon la revendication 1, **caractérisé en ce que** le dispositif (7) d'actionnement des presseurs (6) comprend des moyens actionneurs (8) et des moyens de transmission du mouvement (9).

5. Le centre d'usinage selon la revendication 4, **caractérisé en ce que** les moyens actionneurs (8) comprennent un système pneumatique (81) pour la commande des moyens de transmission du mouvement (9).

6. Le centre d'usinage selon la revendication 4, **caractérisé en ce que** les moyens actionneurs (8) comprennent un système mécanique (82) pour la commande des moyens de transmission du mouvement (9).

7. Le centre d'usinage selon la revendication 4, **caractérisé en ce que** les moyens de transmission du mouvement (9) comprennent un groupe de pistons coulissants (91), chacun étant solidaire d'un presseur (6) correspondant, destinés à mouvoir lesdits presseurs (6) verticalement en fonction des dimensions de la pièce (2) à usiner.

8. Le centre d'usinage selon la revendication 7, **caractérisé en ce que** les moyens de transmission du mouvement (9) comprennent un groupe de cylindres (92), un pour chaque piston (91), coulissant tangentiellement audit piston (91) correspondant de manière à entraîner en rotation le presseur (6) solidaire du piston (91).

9. Le centre d'usinage selon la revendication 8, **caractérisé en ce que** les cylindres (92) et les pistons (91) comprennent des sections de surfaces (911, 921), qui sont profilées de façon correspondante afin d'interagir les unes avec les autres et de déterminer la rotation arbitraire du presseur (6).

10. Le centre d'usinage selon la revendication 7, **caractérisé en ce que** les pistons (91) ont une âme (93) de section polygonale, de manière à maintenir une commande séparée sur les mouvements de rotation et de translation des presseurs (6).
